Europäisches Patentamt

European Patent Office

Office européen des brevets

(11) Publication number: **0 149 323**
**A2**

## (12) EUROPEAN PATENT APPLICATION

(21) Application number: **84308329.6**

(22) Date of filing: **30.11.84**

(51) Int. Cl.⁴: **C 03 C 25/04**
**C 03 C 17/06, C 22 C 38/00**

(30) Priority: **12.01.84 GB 8400730**

(43) Date of publication of application:
**24.07.85 Bulletin 85/30**

(84) Designated Contracting States:
**AT BE CH DE FR IT LI LU NL SE**

(71) Applicant: **STANDARD TELEPHONES AND CABLES
PUBLIC LIMITED COMPANY
190 Strand
London, WC2R 1DU(GB)**

(72) Inventor: **Scott, Michael Grant
The Little House Littlebury
Saffron Walden Essex CB11 4TD(GB)**

(74) Representative: **Dennis, Mark Charles
STC Patent Department Edinburgh Way
Harlow Essex CM20 2SH(GB)**

(54) Coated glass.

(57) In order to overcome adherence problems between glass elements, for example optical fibres, and metallic coatings provided thereon, the metallic coating employed is chosen to have a thermal expansion coefficient which substantially matches that of the glass. Metallic alloys displaying the "invar effect" have very low thermal expansion coefficients and by varying their constituent proportions their thermal expansion coefficients may be matched to that of the glass concerned. Metallic glasses of the type $Fe_{100-x}B_x$, where x is the atomic percentage of boron and lies in the range 10<x<25, may be used with silica or other silicate glasses.

Croydon Printing Company Ltd

## COATED GLASS

This invention relates to coated glass and in particular, but not exclusively, to coated optical fibres.

According to one aspect of the present invention there is provided a glass element provided with a metallic coating, the thermal expansion coefficient of the metallic coating substantially matching that of the glass of the element.

According to another aspect of the present invention there is provided an optical fibre provided with a metallic coating, the thermal expansion coefficient of the metallic coating substantially matching that of the optical fibre.

It has previously been suggested to apply metallic coatings to optical fibres to increase hermeticity, increase strength, increase operating temperature and to produce special fibres for various sensor applications. However, problems arise due to the mismatch between the thermal expansion coefficients of metals, generally of the order of $10^{-5}$ per Kelvin, and that of silica-based glasses, which may be as low as $10^{-7}$ per Kelvin. If the coating is applied at an elevated temperature, the differential contraction during cooling leads to stresses in the fibre and coating and can prevent adherence of the coating. The reverse holds if the coating is applied at low temperatures, for example by sputtering, and the fibre is used at elevated temperatures. Moreover, for sensor applications which depend on a dimensional change in the fibre, small changes in temperature could mask changes in the property being measured.

A number of ferromagnetic alloys, notably crystalline iron-nickel alloys, and some iron-based metallic glasses display a large invar effect. As a consequence these materials have thermal expansion coefficients which are anomalously low, and in some cases negative, over a wide temperature range below their Curie temperatures, this being due to internal magnetic interactions counteracting the natural "tendency" to expand.

In particular, metallic glasses of the type $Fe_{100-x} B_x$, where x is the atomic percentage of boron and lies in the range $10 < x < 25$, have room temperature thermal expansion coefficients as follows, namely:

| | |
|---|---|
| $Fe_{85} B_{15}$ | $-2.3 \times 10^{-6} K^{-1}$ |
| $Fe_{83} B_{17}$ | $+0.3 \times 10^{-6} K^{-1}$ |
| $Fe_{79} B_{21}$ | $+35 \times 10^{-6} K^{-1}$ |

These values, moreover, change little over a wide temperature range. By varying the boron content it is, therefore, possible to match the thermal expansion coefficient of the metallic coating to that of silica or other silicate glasses, and thus to overcome the mismatching problems referred to hereinbefore.

Whereas the proposal of thermal expansion coefficient matching was directed initially to metallic coatings for optical fibres, it is not to be considered so limited. There are a wide number of other areas, for example glass-metal seals, where metallic coatings are applied to glass elements or objects and where problems with coating adherence arise. Such problems may be overcome by matching the thermal expansion coefficient of the metallic coating to the glass as described above.

The metallic glass coatings may be applied to optical fibres in various ways. The methods described in our British Application No. 8332545 (Serial No.        ) (M.G. Scott 1) being particularly suitable. In that application there is described an optical fibre coating process which involves the use of local heating of an applied coating by means of a laser to induce a physical or chemical change therein. A coating of a metallic glass-forming alloy is applied to a fibre by, for example, a dip coating technique or a vapour phase technique, and local heating by a laser employed to fuse the coating to the fibre, thus forming a metallic-glass coated fibre.

CLAIMS:-

1.    A glass element provided with a metallic coating, the thermal expansion coefficient of the metallic coating substantially matching that of the glass of the element.

2.    An optical fibre provided with a metallic coating, the thermal expansion coefficient of the metallic coating substantially matching that of the optical fibre.

3.    The invention of claim 1 or claim 2, wherein the metallic glass is comprised of a ferromagnetic alloy, or an iron-based metallic glass, displaying a large invar effect.

4.    The invention as claimed in claim 3, wherein the metallic glass comprises $Fe_{100-x} B_x$, where x is the atomic percentage of boron and lies in the range $10 \leq x < 25$, the glass of the element or fibre is silica or another silicate glass, and the percentage of boron is selected in order to achieve said matching of the thermal expansion coefficients.